# EUROPÄISCHE PATENTSCHRIFT

(11) **EP 3 519 789 B1**
(45) Veröffentlichungstag und Bekanntmachung des Hinweises auf die Patenterteilung: **04.08.2021**
(21) Anmeldenummer: 17761891.5
(22) Anmeldetag: 06.09.2017
(51) Int. Cl.: G01L 17/00, G01L 19/06

(54) **DRUCKSENSORVORRICHTUNG SOWIE DRUCKSENSOR**
PRESSURE SENSOR DEVICE AND PRESSURE SENSOR
DISPOSITIF DE DÉTECTION DE PRESSION ET CAPTEUR DE PRESSION

(30) Priorität: 28.09.2016 DE 102016218667
(43) Veröffentlichungstag der Anmeldung: 07.08.2019
(73) Patentinhaber: Robert Bosch GmbH, 70442 Stuttgart (DE)
(72) Erfinder: SCHELLKES, Eckart, Taipei 104 (TW)
(86) Internationale Anmeldenummer: PCT/EP2017/072324
(87) Internationale Veröffentlichungsnummer: WO 2018/059891

(56) Entgegenhaltungen:
- EP-A2- 1 275 951
- EP-A2- 1 275 951
- DE-A1-102012 000 051
- DE-A1-102012 000 051
- US-A1- 2010 230 766
- US-A1- 2010 230 766

## Beschreibung

Die Erfindung betrifft eine Drucksensorvorrichtung für einen Drucksensor, insbesondere einen Nieder- oder Mitteldrucksensor. Ferner betrifft die Erfindung einen Drucksensor, insbesondere einen Nieder- oder Mitteldrucksensor, z. B. einen Reifendrucksensor, wobei der Drucksensor eine erfindungsgemäße Drucksensorvorrichtung aufweist. Des Weiteren betrifft die Erfindung eine Einrichtung, eine Vorrichtung, ein Gerät oder ein System mit einer erfindungsgemäßen Drucksensorvorrichtung und/oder einem erfindungsgemäßen Drucksensor.

### Stand der Technik

Für eine Aufbau- und Verbindungstechnik eines Drucksensors, welcher einen Zugang für ein zu sensierendes Fluid benötigt, besteht eine wesentliche Herausforderung aufgrund des Zugangs darin, eine empfindliche Struktur, wie eine Sensiermembran, und/oder eine Elektronik, z. B. Bondpads, des Drucksensors vor einem schädlichen Einfluss von einem Gas oder einer Flüssigkeit zu schützen. - Bei einem Mitteldrucksensor, dessen typischer Druckbereich bei zehn bis 100 bar liegt und z. B. eingesetzt wird, einen Fluiddruck in einem Getriebeöl zu sensieren, besteht eine Lösung aus einer gekapselten Ölvorlage, also einem mechanischen Zugang.

Bei einer gekapselten Ölvorlage ist zwischen einer Sensiermembran und einem zu sensierenden Fluid eine gekapselte, ölgefüllte Kammer positioniert, welche das zu sensierendes Fluid von der Sensiermembran fernhält und gleichzeitig einen zu messenden Druck überträgt. Eine Aufbau- und Verbindungstechnik dafür ist aufwändig, da ein Kammeröl in einem verschlossenen Gehäuse, z. B. einem Stahlgehäuse, mit einer vergleichsweise dünnen Stirnfläche gekapselt sein muss. - Gekapselte Olvorlagen lehren z. B. die US 5 625 151 A, die US 6 591 686 B1 oder die EP 1 275 951 A2.

### Aufgabenstellung

Es ist eine Aufgabe der Erfindung, einen verbesserten Drucksensor, insbesondere einen verbesserten Nieder- oder Mitteldrucksensor, oder eine verbesserte Drucksensorvorrichtung für einen Drucksensor, insbesondere einen Nieder- oder Mitteldrucksensor, anzugeben. Hierbei soll der Drucksensor bzw. die Drucksensorvorrichtung die Fähigkeit besitzen, eine Information über einen Fluiddruck vergleichsweise ungedämpft erhalten zu können. Ferner soll der erfindungsgemäße Drucksensor bzw. die erfindungsgemäße Drucksensorvorrichtung einfach aufgebaut und kostengünstig in seiner bzw. ihrer Herstellung, Montage und Wartung sein.

### Offenbarung der Erfindung

Die Aufgabe der Erfindung ist mittels einer Drucksensorvorrichtung für einen Drucksensor, insbesondere einen Nieder- oder Mitteldrucksensor; mittels eines Drucksensors, insbesondere einen Nieder- oder Mitteldrucksensor, z. B. eines Reifendrucksensors, mit einer erfindungsgemäßen Drucksensorvorrichtung; und mittels einer Einrichtung, einer Vorrichtung, einem Gerät oder einem System mit einer erfindungsgemäßen Drucksensorvorrichtung und/oder einem erfindungsgemäßen Drucksensor; gemäß den unabhängigen Ansprüchen gelöst. - Vorteilhafte Weiterbildungen, zusätzliche Merkmale und/oder Vorteile der Erfindung ergeben sich aus den abhängigen Ansprüchen und der folgenden Beschreibung.

Die erfindungsgemäße Drucksensorvorrichtung umfasst eine Sensiereinrichtung, die eine einer Sensierumgebung mit einem zu sensierenden Fluid zuwendbare Sensierseite aufweist, wobei mittelbar und/oder unmittelbar auf der Sensierseite eine Fluiddruck-Übertragungseinrichtung vorgesehen ist, durch welche hindurch ein Fluiddruck als Fluiddruck des zu sensierenden Fluids auf die Sensiereinrichtung übertragbar ist. Hierbei kann die Drucksensorvorrichtung und/oder deren Fluiddruck-Übertragungseinrichtung derart ausgebildet sein, dass der Fluiddruck mittels eines Übertragungsfluids in der Fluiddruck-Übertragungseinrichtung auf die Sensierseite (Sensiermembran) übertragbar ist.

Ein Festkörper der Fluiddruck-Übertragungseinrichtung kann dabei bei in der Sensierumgebung auftretenden Drücken und/oder Temperaturen im Wesentlichen formstabil, inkompressibel und/oder wärmefest ist sein. Ein formstabiler Festkörper der Fluiddruck-Übertragungseinrichtung (siehe unten), umfasst bevorzugt einen Feststoff, der bei keiner und einer (fluid-)mechanischen Einwirkung im Wesentlichen keine Formänderung erfährt und bevorzugt im Wesentlichen inkompressibel ist. Hierbei kann der Festkörper im Wesentlichen freundlich (liebend, ... phil) und/oder neutral (physikalisch und/oder chemisch inert, d. h. untätig) gegenüber dem Übertragungsfluid und/oder dem zu sensierenden Fluid sein. Ferner kann der Festkörper ggf. im Wesentlichen feindlich (meidend, ...phob) gegenüber dem zu sensierenden Fluid sein. Hierbei kann der Festkörper im Wesentlichen hydrophob und/oder lipophil sein.

Darüber hinaus kann der Festkörper der Fluiddruck-Übertragungseinrichtung derart konstituiert sein, dass die Fluiddruck-Übertragungseinrichtung wenigstens bei in der Sensierumgebung auftretenden Drücken und/oder Temperaturen das Übertragungsfluid im Wesentlichen nicht abgibt (Anhaften). Des Weiteren ist Erfindungsgemäß der Festkörper eine poröse (insbesondere offenporig) und/oder schwammartige und fluiddurchlässige Struktur umfassen. Er kann ferner derart konstituiert sein, dass vergleichsweise große Leerstellen (offene Poren, offene Kammern etc.) im Festkörper kleiner als im zu sensierenden Fluid vorliegende, vergleichsweise kleine Partikel sind. Des Weiteren kann der Festkörper derart konstituiert sein, dass er oder die Fluiddruck-Übertragungseinrichtung durch ein typisches oder herkömmliches Bestückverfahren für Elektronikchips, wie z. B. Kleben, Löten, Stecken (Verrasten) etc., auf der Sensiereinrichtung vorsehbar oder vorgesehen ist. Insbesondere kann der Festkörper eine Keramik, ein Metall, eine Metalllegierung, einen Kunststoff oder ein Gestein aufweisen.

Folgende Ausführungen beziehen sich z. B. auf die poröse und/oder schwammartige und fluiddurchlässige Struktur des Festkörpers (ohne Übertragungsfluid) der Fluiddruck-Übertragungseinrichtung bzw. der Fluiddruck-Übertragungseinrichtung selbst. Als eine Keramik kann z. B. Bornitrit (bevorzugt, aber nicht darauf beschränkt), Zirkonoxid, Aluminiumoxid, Titanoxid, Chromoxid etc. angewendet sein, wobei ein Gemisch davon natürlich anwendbar ist. Als ein Metall oder eine Metalllegierung kann ein entsprechender Schaum und/oder Schwamm davon, z. B. auf Aluminiumbasis, Nickelbasis etc. angewendet sein. Als ein Gestein eignet sich ein Glas, z. B. Bims, ggf. Sandstein etc. Ferner kann eine Pseudolegierung angewendet sein, wie z. B. Nickelgraphit etc. - Hierbei ist es möglich, diese Stoffe als Mischung und/oder Schichtung anzuwenden.

Das Übertragungsfluid für die Fluiddruck-Übertragungseinrichtung bzw. der Fluiddruck-Übertragungseinrichtung kann bei in der Sensierumgebung auftretenden Drücken und/oder Temperaturen im Wesentlichen inkompressibel und/oder wärmefest sein. Hierbei kann das Übertragungsfluid im Wesentlichen freundlich (liebend, ... phil) gegenüber dem Festkörper der Fluiddruck-Übertragungseinrichtung sein. Ferner kann das Übertragungsfluid im Wesentlichen neutral (physikalisch und/oder chemisch inert, d. h. untätig) gegenüber dem Festkörper und/oder dem zu sensierenden Fluid sein. Darüberhinaus kann das Übertragungsfluid ggf. im Wesentlichen feindlich (meidend, ... phob) gegenüber dem zu sensierenden Fluid sein; d. h. im Wesentlichen nicht mischbar mit diesem sein.

Ist das zu sensierende Fluid z. B. Wasser so eignet sich für das Übertragungsfluid (siehe auch im Folgenden) z. B. ein Öl, bzw. ggf. vice versa. Ist das zu sensierende Fluid z. B. Luft, so eignet sich für das Übertragungsfluid z. B. ein Öl oder ggf. sogar Wasser. Ferner kann das Übertragungsfluid im Wesentlichen hydrophob und/oder lipophil oder lipophob sein. Als ein Übertragungsfluid eignet sich z. B. Wasser, ein Öl, eine Lösung, ein organisches oder anorganisches Lösungsmittel etc. - Das Übertragungsfluid kann auch als Vorlagefluid, der Festkörper als Vorlagekörper und die Fluiddruck-Übertragungseinrichtung als Fluidvorlage bezeichnet sein.

Insbesondere ist es bevorzugt, natürlich nur dort wo es aufgrund einer Stoffwahl vergleichsweise einfach möglich ist, dass: der Festkörper in erster Linie freundlich oder in zweiter Linie neutral gegenüber dem Übertragungsfluid ist; der Festkörper in erster Linie neutral oder in zweiter Linie freundlich oder in dritter Linie feindlich gegenüber dem sensierenden Fluid ist (Position eins und zwei können je nach einem Anwendungsfall die Plätze tauschen); das Übertragungsfluid in erster Linie neutral oder in zweiter Linie freundlich gegenüber dem zu sensierenden Fluid ist (diese Positionen können je nach einem Anwendungsfall die Plätze tauschen). Hierbei ist es ferner bevorzugt, dass sowohl das Übertragungsfluid als auch das zu sensierende Fluid hydrophob sind.

Der Festkörper der Fluiddruck-Übertragungseinrichtung ist bevorzugt ein poröser, offenporiger und/oder schwammartiger und fluiddurchlässiger Festkörper. Hierbei kann der Festkörper derart ausgebildet sein, dass das in ihn einbringbare Übertragungsfluid ohne eine Außeneinwirkung im Wesentlichen selbstständig im porösen, offenporigen und/oder schwammartigen und fluiddurchlässigen Festkörper verbleibt. D. h. der Festkörper der Fluiddruck-Übertragungseinrichtung ist derart ausgebildet, dass das Übertragungsfluid bevorzugt einfach in ihn hinein gebracht werden kann (fluiddurchlässig) und ohne eine Außeneinwirkung hauptsächlich oder im Wesentlichen in ihm verbleibt (schwammartig, Anhaften).

Ferner ist der Festkörper bevorzugt derart ausgebildet, dass durch ihn hindurch mittels des Übertragungsfluids ein Fluiddruck von einer Seite des Festkörpers auf eine andere Seite des Festkörpers, bevorzugt eine diametrale Seite, vermittelbar ist (fluiddurchlässig). Hierbei ist es bevorzugt, dass bei einem porösen Festkörper Poren bzw. Kammern des Festkörpers miteinander in Fluidkommunikation stehen, d. h. offenporig ist. Dies gilt analog für die Fluiddruck-Übertragungseinrichtung. Anwendbar hierfür ist insbesondere eine poröse Keramik, wie z. B. Bornitrit, oder ein Schaum oder Schwamm aus einem Metall bzw. einer Metalllegierung (siehe auch oben).

Zwischen der Sensiereinrichtung und der Fluiddruck-Übertragungseinrichtung kann ein Koppelspalt oder eine Koppelschicht einrichtbar oder eingerichtet sein, in welchem bzw. welcher das Übertragungsfluid vorsehbar oder vorgesehen ist, bzw. als welcher bzw. welche das Übertragungsfluid einrichtbar oder eingerichtet ist. Hierbei kann das Übertragungsfluid des Koppelspalts oder der Koppelschicht in Fluidkommunikation mit dem Übertragungsfluid der Fluiddruck-Übertragungseinrichtung bringbar sein oder stehen. Hierbei ist der Koppelspalt oder die Koppelschicht bevorzugt zwischen einer Sensiermembran (siehe unten) der Sensiereinrichtung und der Fluiddruck-Übertragungseinrichtung einrichtbar oder eingerichtet. Bevorzugte Schichtdicken für Koppelschichten sind kleiner 10µm-20µm. Dickere Koppelschichten, also z. B. Koppelspalte, sind natürlich anwendbar.

Zusätzlich (in Fluidkommunikation damit stehend) oder alternativ (diesen substituierend) zu einem Koppelspalt oder einer Koppelschicht kann ein Fluidkanal, ein Fluidreservoir etc. in der Drucksensorvorrichtung eingerichtet sein. - Die Fluiddruck-Übertragungseinrichtung bzw. deren Festkörper kann mit einem Außenrand (Abschnitt(e) davon oder vollständig umlaufend) auf der Sensiereinrichtung bevorzugt abseits deren Sensiermembran aufliegen und ist dort bevorzugt, z. B. mittels einer teilweise oder vollständig umlaufenden Klebung, mit dieser verbindbar oder verbunden (mechanische Verbindung, siehe unten). Andere Verbindungstechniken (Löten, Stecken, Schrauben, ggf. unter Anwendung einer Dichtung etc.) sind natürlich anwendbar. Gemäß der Erfindung kann die Sensiereinrichtung als ein Sensorchip, insbesondere ein z. B. herkömmlicher Drucksensorchip, ausgebildet sein.

Bevorzugt weist die Sensiereinrichtung eine Sensiermembran auf, über und/oder auf welcher der Festkörper bzw. die Fluiddruck-Übertragungseinrichtung vorsehbar oder vorgesehen ist, wobei die Sensiermembran, abgesehen von eine herkömmlichen Anbindung an die Sensoreinrichtung etc., lediglich mit dem Übertragungsfluid der Fluiddruck-Übertragungseinrichtung in Fluidkommunikation bringbar oder gebracht ist. Dies erfolgt, wie z. B. oben schon erläutert, bevorzugt über den einrichtbaren oder eingerichteten Koppelspalt oder die einrichtbare oder eingerichtete Koppelschicht mit dem Übertragungsfluid. Hierbei ist die Drucksensorvorrichtung derart eingerichtet, dass das zu sensierende Fluid ein gasförmiges und/oder flüssiges Fluid ist. Dies kann z. B. Luft, ein Aerosol, Wasser, ein Öl, eine Lösung, ein organisches oder anorganisches Lösungsmittel, eine Suspension, eine Emulsion etc. sein.

In Ausführungsformen der Erfindung kann die Sensiereinrichtung und der Festkörper bzw. die Fluiddruck-Übertragungseinrichtung zweistückig separat ausgebildet oder zweiteilig zusammenhängend verbunden sein. Die Drucksensorvorrichtung kann derart konstituiert sein, dass die Drucksensorvorrichtung mittels eines typischen oder herkömmlichen Integrationsverfahrens oder Umhüllungsverfahrens für Elektronikchips, wie z. B. Vergießen, (Transfer-)Molden etc., in ein Chippackage integrierbar oder integriert ist. Hierbei kann der Festkörper bzw. die Fluiddruck-Übertragungseinrichtung oder die Drucksensorvorrichtung in einen Träger (Deckel, Gehäuse etc.) teilweise oder vollständig integriert sein.

Eine mechanische Verbindung zwischen der Sensiereinrichtung und dem Festkörper bzw. der Fluiddruck-Übertragungseinrichtung kann fluiddicht, insbesondere wenigstens fluiddicht gegenüber dem Übertragungsfluid, sein. D. h., ist die mechanische Verbindung fluiddicht gegenüber dem Übertragungsfluid (Flüssigkeit) ausgebildet, so kann die mechanische Verbindung gegenüber dem zu sensierenden Fluid (z. B. ein Gas) undicht sein, da u. a. das Übertragungsfluid die mechanische Verbindung gegenüber dem zu sensierenden Fluid abdichtet bzw. isoliert.

Bei dem erfindungsgemäßen Drucksensor ist in einem Festkörper einer Fluiddruck-Übertragungseinrichtung seiner Drucksensorvorrichtung ein Übertragungsfluid vorgesehen. Hierbei ist ein Füllstand des Übertragungsfluids im Festkörper bevorzugt kleiner als ein maximaler Füllstand des Übertragungsfluids im Festkörper bzw. in der Fluiddruck-Übertragungseinrichtung. Eine Sensierumgebung des Drucksensors kann ein Innenraum, ein (Außen-)Raum oder die Atmosphäre sein. Hierbei ist das zu sensierende Fluid (Fluiddruck) in eine Fluidkommunikation mit dem Übertragungsfluid bringbar. Die Drucksensorvorrichtung oder lediglich der Festkörper bzw. die Fluiddruck-Übertragungseinrichtung des Drucksensors kann teilweise oder vollständig an/in einem Träger vorgesehen sein. D. h. die Sensiereinrichtung kann ggf. frei stehen. Hierbei kann der Träger ein Gehäuse, ein Deckel etc. sein.

Ferner kann ein Außenrand des Festkörpers bzw. der Fluiddruck-Übertragungseinrichtung und ein Material des Trägers (Innenrand) als ein Durchdringungsverbund ausgebildet sein. Hierbei ist es bevorzugt, dass bei seiner Herstellung eine flüssige oder zähflüssige Masse (Vergießmasse) für den Träger in den Außenrand der Fluiddruck-Übertragungseinrichtung eindringt und dabei zusammen mit dem Außenrand wenigstens gegenüber dem Übertagungsfluid und bevorzugt auch gegenüber dem zu sensierenden Fluid, einen fluiddichten Durchdringungsverbund ausbildet. Hierbei kann die Drucksensorvorrichtung, neben ihrer fluidmechanischen Schnittstelle, den mechanischen Anschluss aufweisen.

Der Drucksensor kann über ein Dichtelement an/in einer erfindungsgemäßen Einrichtung, einer erfindungsgemäßen Vorrichtung, einem erfindungsgemäßen Gerät oder einem erfindungsgemäßen System vorgesehen oder eingerichtet sein. Ferner kann der Drucksensor eingerichtet sein, einen Innendruck, einen Außendruck (Raumdruck) oder einen Atmosphärendruck der Einrichtung, der Vorrichtung, des Geräts oder des System zu sensieren. Darüber hinaus kann der Drucksensor über einen mechanischen Anschluss, z. B. einen Stutzen, an die Einrichtung, die Vorrichtung, das Gerät oder das System fluidmechanisch angeschlossen sein.

### Kurzbeschreibung der Figuren

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Schemata und/oder Komponenten, welche eine identische, univoke oder analoge Ausbildung und/oder Funktion besitzen, sind in der Figurenbeschreibung (siehe unten), den Patentansprüchen und in den Figuren (Fig.) der Zeichnung mit denselben Bezugszeichen gekennzeichnet. Bei der Erfindung kann ein Merkmal positiv, d. h. vorhanden, oder negativ, d. h. abwesend, ausgestaltet sein, wobei ein negatives Merkmal als Merkmal nicht explizit erläutert ist, wenn nicht Wert darauf gelegt ist, dass es abwesend ist.

Ein Merkmal (Abschnitt, Element, Bauteil, Einheit, Schema, Komponente etc.) dieser Spezifikation (Beschreibung (Erfindungsbeschreibung (siehe oben), Figurenbeschreibung), Patentansprüche, Zeichnung) kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesen zugeordneten Merkmal, bzw. vice versa, in der Beschreibung, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale dieser Spezifikation sind (angesichts des (meist unbekannten) Stands der Technik) auch als optionale Merkmale interpretierbar; d. h. jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung, Sektion etc.), wodurch, z. B. unter Beachtung von Gleichwirkung und/oder Gleichwertigkeit, eine Verallgemeinerung eines oder diesen Merkmals möglich ist. - In den lediglich beispielhaften Fig. zeigen:
- Fig. 1: in einer Schnittansicht eine vollständig vergossene erfindungsgemäße Sensorvorrichtung für einen erfindungsgemäßen Sensor;
- Fig. 2: in einer Schnittansicht eine teilweise vergossene erfindungsgemäße Sensorvorrichtung für einen erfindungsgemäßen Sensor; und

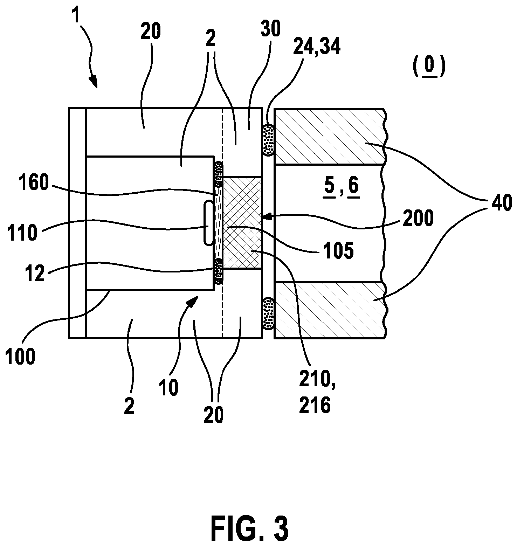

- Fig. 3: in einer Schnittansicht einen an einen Anschluss fluidmechanisch angeschlossenen erfindungsgemäßen Sensor.

### Ausführungsformen der Erfindung

Die Erfindung ist im Folgenden anhand von Ausführungsbeispielen von Ausführungsformen eines Sensors näher erläutert. Die Erfindung ist jedoch nicht auf solche Ausführungsformen und/oder die nachfolgend erläuterten Ausführungsbeispiele beschränkt, sondern ist von grundlegenderer Natur, sodass sie auf sämtliche Sensoren im Sinne der Erfindung angewendet werden kann. - Obwohl die Erfindung im Detail durch bevorzugte Ausführungsbeispiele näher beschrieben und illustriert ist, so ist die Erfindung nicht durch die offenbarten Ausführungsbeispiele eingeschränkt. Andere Variationen können hieraus abgeleitet werden ohne den Schutzumfang der Erfindung zu verlassen.

Die Zeichnung zeigt jeweils eine Sensorvorrichtung 10 oder eine Drucksensorvorrichtung 10 für einen Sensor 1 oder einen Drucksensor 1 für eine Einrichtung 0, eine Vorrichtung 0, ein Gerät 0, ein System 0 etc. Die Sensorvorrichtung 10 umfasst eine Sensiereinrichtung 100, wie z. B. einen Sensorchip 100, insbesondere einen Drucksensorchip 100, und eine erfindungsgemäße Übertragungseinrichtung 200 oder eine erfindungsgemäße Fluidruck-Übertragungseinrichtung 200. Die Sensiereinrichtung 100 und die Übertragungseinrichtung 200 bzw. ein Körper 210, insbesondere ein poröser, offenporiger, schwammartiger und/oder fluiddurchlässiger Festkörper 210, der Übertragungseinrichtung 200 sind bevorzugt mit einer mechanischen Verbindung 12 aneinander befestigt. Solch eine mechanische Verbindung 12, kann eine Klebeverbindung 12, eine Lötverbindung 12, eine Klemmverbindung 12 etc. sein.

Hierbei kann die Sensorvorrichtung 10, die Sensiereinrichtung 100 und/oder die Übertragungseinrichtung 200 an/in einem Chippackage 2 vorgesehen oder in ein Chippackage 2 vollständig oder teilweise integriert sein. - Die Sensiereinrichtung 100 weist auf ihrer Sensierseite 105 die Übertragungseinrichtung 200 auf. Hierbei ist die Sensierseite 105 der Sensiereinrichtung 100 einer Sensierumgebung 5 mit einem zu sensierenden flüssigen und/oder gasförmigen Fluid 6 zugewandt. Die Sensierumgebung 5 kann z. B. ein Innenraum, ein (Außen-)Raum oder die Atmosphäre sein. D. h. auch (vgl. auch unten), dass die Übertragungseinrichtung 200, abgesehen von ihrem Übertragungsfluid 216 (siehe unten), in der Sensierumgebung 5 platziert ist, in diese hineinragt bzw. an dieser vorgesehen ist, was in einem fluidmechanischen Sinn verstanden sein soll.

Bevorzugt weist die Übertragungseinrichtung 200 eine poröse, offenporige und/oder schwammartige und fluiddurchlässige Struktur (Stoff) bzw. einen porösen, offenporigen und/oder schwammartigen und fluiddurchlässigen Festkörper 210 (Stoff) auf, welche bzw. welcher auf der Sensiereinrichtung 100 vorsehbar oder vorgesehen ist. Hierbei kann die Struktur bzw. der Festkörper 210, abgesehen von einer Befestigung, direkt auf der Sensiereinrichtung 100 vorsehbar oder vorgesehen sein. Damit die Sensiereinrichtung 100 aufgrund der Übertragungseinrichtung 200 ein Signal, insbesondere einen Fluiddruck, auf ihrer Sensierseite 105 bzw. der Sensierumgebung 5 sensieren kann, ist die Übertragungseinrichtung 200 teilweise oder vollständig mit einem Übertragungsfluid 216 gefüllt.

Diese Struktur bzw. der Festkörper 210 erfüllt bevorzugt eine oder eine Mehrzahl folgender Eigenschaften (hauptsächlich oder im Wesentlichen): porös (Kammern aufweisend, im Wesentlichen zur Aufnahme des Übertragungsfluids 216 und zur Übertragung des Fluiddrucks), offenporig (im Wesentlichen zur Übertragung des Fluiddrucks), schwammartig (im Wesentlichen zum Zurückhalten des Übertragungsfluids 216), fluiddurchlässig (im Wesentlichen zur Übertragung des Fluiddrucks), inkompressibel (im Wesentlichen zur verlustfreien Übertragung des Fluiddrucks), wärmefest (Langlebigkeit des Übertragungsfluids 216), hydrophob (zur Vermeidung einer Ansammlung von oder einer Substitution mit Wasser über eine Lebensdauer des Sensors 1) und/oder lipophil (aufnahmefähig für ein Übertragungsfluid 216 und/oder (sehr) gut benetzbar mit einem Öl (Übertragungsfluid 216)).

Stoffe, die diese Eigenschaften zumindest teilweise erfüllen sind oben in der Erfindungsbeschreibung angegeben. Der Stoff, z. B. poröses Bornitrit (EP 0 076 731 A2), ist mit einer Sensiermembran 110 der Sensiereinrichtung 100 einerseits über einen Koppelspalt 160 oder eine Koppelschicht 160 mit Übertragungsfluid 216 in (fluid-)mechanischem Kontakt, und ist auf einer anderen Seite zum zu sensierenden Fluid 6 hin offen, sodass eine Druckänderung im zu sensierenden Fluid 6 auf das Übertragungsfluid 216 in der Übertragungseinrichtung 200 fluidmechanisch übertragbar ist. Das Übertragungsfluid 216 ist bevorzugt derart zu wählen, dass ein direkter Kontakt mit dem zu sensierenden Fluid 6 keine unerwünschten physikalischen und/oder chemischen Wechselwirkungen erzeugt.

Bevorzugt ist die Übertragungseinrichtung 200 derart zu wählen, dass sie sich mit einer typischen Bestücktechnik auf der Sensiereinrichtung 100 bestücken lässt, was z. B. mittels einer z. B. ringförmigen Klebeverbindung erfolgen kann. Ferner ist die Übertragungseinrichtung 200 bevorzugt derart zu wählen, dass sie sich mit üblichen Methoden wie z. B. (Transfer-)Molden in das Chippackage 2 integrieren lässt. - Gemäß der Erfindung ist keine hermetische, d. h. gasdichte, Kapselung mehr notwendig, da die Übertragungseinrichtung 200 ihr Übertragungsfluid 216 bevorzugt im Wesentlichen nicht mehr abgibt.

In einer Anwendung bzw. einem Betrieb des Sensors 1 kommen bevorzugt eine Übertragungseinrichtung 200 und ihr Übertragungsfluid 216 in einen direkten fluidmechanischen Kontakt mit einem zu sensierenden Fluid 6. Hierdurch können potenziell unterschiedliche Füllgrade der Übertragungseinrichtung 200 mit Übertragungsfluid 216 ausgeglichen werden. Die Übertragungseinrichtung 200 ist bevorzugt derart ausgestaltet, dass sie Partikel aus dem zu sensierenden Fluid 6 von der Sensiereinrichtung 100 fernhält und verstopft durch eine bevorzugt große Anzahl von vergleichsweise (sehr) kleinen Poren bzw. Kanälen nur bei einer vergleichsweise (sehr) hohen Belastung mit kleinsten Partikel.

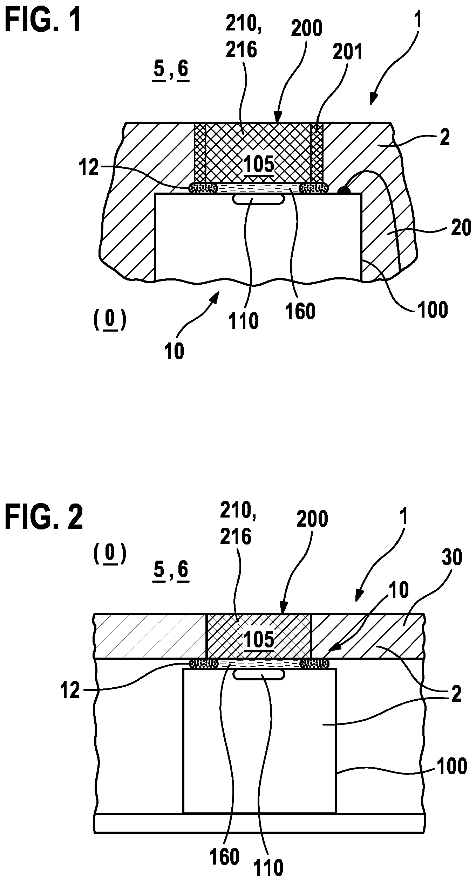

Die Fig. 1 zeigt einen Aufbau eines Drucksensors 1 bzw. einer Drucksensorvorrichtung 10 für einen vollständig gemoldeten, d. h. gestalteten, geformten, umgossenen, vergossenen und/oder gepressten, Träger 20, der als ein Gehäuse 20 ausgebildet sein kann. Ein bezüglich der Drucksensorvorrichtung 10 partiell gemoldeter Träger 20 ist natürlich anwendbar. Eine Sensiereinrichtung 100 der Drucksensorvorrichtung 10 ist an ihrer Sensierseite 105 mit einer Fluidruck-Übertragungseinrichtung 200 bestückt. Ein bevorzugt poröser Festkörper 210 der Fluidruck-Übertragungseinrichtung 200 ist mittels einer mechanischen Verbindung 12, die z. B. eine Ringklebung 12 sein kann, über einer Sensiermembran 110 der Sensiereinrichtung 100 derart fixiert, dass ein vergleichsweise dünner Koppelspalt 160 zwischen dem Festkörper 210 und der Sensiermembran 110 frei bleibt. Eine Koppelschicht 160 ist natürlich anwendbar.

Der Koppelspalt 160 oder die Koppelschicht 160 zwischen dem Festkörper 210 und der Sensiermembran 110 ist mit einem Übertragungsfluid 216, welches ein Öl 216 sein kann, gefüllt und stellt zusammen mit einem gleichen Übertragungsfluid 216 im Festkörper 210 einen Druckübertrag auf die Sensiermembran 110 der Drucksensorvorrichtung 10 sicher, ohne dass der Festkörper 210 auf der Sensiermembran 110 aufliegt bzw. mit dieser in einen direkten mechanischen Kontakt ist bzw. kommt. D. h. der Festkörper 210 ist beabstandet zur Sensiermembran 110 und einmal von der mechanischen Verbindung 12 abgesehen, bevorzugt direkt auf/an der Sensiereinrichtung 100 befestigt. - Ferner kann, wie in der Fig. 2 dargestellt, die Sensiereinrichtung 100 frei stehen und lediglich der Festkörper 210 in einen Träger 30 eingemoldet sein, der als ein Deckel 30 ausgebildet sein kann. Ein bezüglich der Sensiereinrichtung 100 partiell gemoldeter Träger 30 ist natürlich anwendbar.

Die Sensiereinrichtung 100 bzw. ein Sensorchip 100 oder ein Drucksensorchip 100 kann insbesondere vollständig eingemoldet werden bzw. sein. Um einen Aufbau mit vollständig eingemoldeter Sensiereinrichtung 100 und vollständig eingemoldetem Festkörper 210 zu erreichen, können die Sensiereinrichtung 100 und der Festkörper 210 in das Gehäuse 20 bzw. Träger 20 integriert werden bzw. sein. Hierbei kann der poröse Festkörper 210 z. B. mit einem üblichen Verfahren in das Gehäuse 20 eingemoldet werden oder sein. Dies kann ggf. ohne eine zusätzliche Maßnahme oder ggf. ohne einen zusätzlichen Verfahrensschritt bei dem Verfahren eingerichtet werden bzw. sein. - Die Fig. 1 zeigt ferner eine solche Ausführungsform mit einem gemoldeten Gehäuse 20 ohne einen Deckel 30.

Hierbei, aber nicht ausschließlich hierbei, entsteht an den aufeinander treffenden Rändern ein Bereich 201, in welchem bei einem Moldvorgang ein flüssiger Kunststoff in den Festkörper 210 eindringt und dort aushärten kann. Dadurch entsteht eine mechanisch stabile und eine bevorzugt wenigstens flüssigkeitsdichte Verbindung, die als ein Durchdringungsverbund 201 ausgebildet wird bzw. ist. Der Durchdringungsverbund 201 umfasst dabei einen bevorzugt vollständig umlaufenden Außenrad des Festkörpers 210 und einen in diesen eingedrungenen Innenrand des Gehäuses 20 bzw. Trägers 20.

Die Sensiereinrichtung 100 bzw. der Sensorchip 100 oder der Drucksensorchip 100 kann ferner insbesondere frei stehend vorgesehen sein. Um einen Aufbau mit frei stehender Sensiereinrichtung 100 zu erreichen, kann lediglich der Festkörper 210 in den Deckel 30 bzw. Träger 30 integriert werden bzw. sein. Der Deckel 30 kann zeitlich nach dessen Herstellung z. B. mittels einer ringförmigen Klebung 12 auf die Sensiereinrichtung 100 aufgeklebt werden, sodass auch hier der vergleichsweise dünne Koppelspalt 160 (Übertragungsfluid 216) zwischen dem Festkörper 210 und der Sensiermembran 110 gebildet wird bzw. ist. Eine Koppelschicht 160 mit Übertragungsfluid 216 ist natürlich wiederum anwendbar. Hierbei entsteht wiederum ein Durchdringungsverbund 201, der einen bevorzugt vollständig umlaufenden Außenrad des Festkörpers 210 und einen in diesen eingedrungenen Innenrand des Deckels 30 bzw. Trägers 30 umfasst. - Die Fig. 2 zeigt ferner eine solche Ausführungsform mit einem gemoldeten Deckel 30.

Die Fig. 4 zeigt beispielhaft eine mögliche Anwendung des Sensors 1 bzw. Drucksensors 1 aus der Fig. 1 und der Fig. 2. Der Sensor 1 bzw. Drucksensor 1 aus der Fig. 1 oder Fig. 2 ist über ein Dichtelement 24 (Fig. 1), 34 (Fig. 2) bzw. eine Dichtung 24 (Fig. 1), 34 (Fig. 2) an einen Anschluss 40, der z. B. als ein Stutzen 40 ausgebildet sein kann, mechanisch und fluidmechanisch angeschlossen. Der Anschluss 40 liefert das zu sensierende Fluid 6 an eine Sensierseite 105 des Sensors 1 bzw. Drucksensors 1 mit dem bevorzugt ölgefüllten (Übertragungsfluid 216) porösen Festkörper 210. Der Anschluss 40 kann dabei z. B. ein Anschluss 40 zum Sensieren eines Fluiddrucks in einem Öl (zu sensierendes Fluid 6), z. B. Getriebeöl, sein. Vielfältige andere Anwendungsmöglichkeiten für Fluiddruckkontrollsysteme, Systeme zum Messen/Sensieren/Detektieren von Fluiddrücken etc., z. B. für Luft, Wasser, Öl etc., z. B. ein Reifendruckkontrollsystem, ein Umgebungsdruckmesssystem etc., sind natürlich möglich.

## Patentansprüche

1. Drucksensorvorrichtung (10), geeignet für einen Drucksensor (1), insbesondere einen Nieder- (1) oder Mitteldrucksensor (1), mit
einer Sensiereinrichtung (100), die eine einer Sensierumgebung (5) mit einem zu sensierenden Fluid (6) zuwendbare Sensierseite (105) umfasst, wobei mittelbar oder unmittelbar auf der Sensierseite (105) eine Fluiddruck-Übertragungseinrichtung (200) vorgesehen ist, **dadurch gekennzeichnet, dass** die Fluiddruck-Übertragungseinrichtung (200) eine poröse und/oder schwammartige und fluiddurchlässige Struktur oder Festkörper (210) aufweist, welche mit einem Übertragungsfluid (216) gefüllt ist, durch welche hindurch ein Fluiddruck als Fluiddruck des zu sensierenden Fluids (6) auf die Sensiereinrichtung (100) übertragbar ist; und die Fluiddruck-Übertragungseinrichtung (200) derart ausgebildet ist, dass der Fluiddruck mittels des Übertragungsfluids (216) in der Fluiddruck-Übertragungseinrichtung (200) auf die Sensierseite (105) übertragbar ist.

2. Drucksensorvorrichtung (10) gemäß vorhergehendem Anspruch, **dadurch gekennzeichnet, dass** ein Festkörper (210) der Fluiddruck-Übertragungseinrichtung (200):
• bei in der Sensierumgebung (5) auftretenden Drücken und/oder Temperaturen im Wesentlichen formstabil, inkompressibel und/oder wärmefest ist;
• im Wesentlichen hydrophob und/oder lipophil ist;
• derart konstituiert ist, dass die Fluiddruck-Übertragungseinrichtung (200) wenigstens bei in der Sensierumgebung (5) auftretenden Drücken und/ oder Temperaturen das Übertragungsfluid (216) im Wesentlichen nicht abgibt;
• derart konstituiert ist, dass vergleichsweise große Leerstellen im Festkörper (210) kleiner als im zu sensierenden Fluid (6) vorliegende, vergleichsweise kleine Partikel sind;
• derart konstituiert ist, dass der Festkörper (210) oder die Fluiddruck-Übertragungseinrichtung (200) durch ein Bestückverfahren für Elektronikchips auf der Sensiereinrichtung (100) vorsehbar oder vorgesehen ist; und/oder
• eine Keramik, ein Metall, eine Metalllegierung, einen Kunststoff oder ein Gestein umfasst.

3. Drucksensorvorrichtung (10) gemäß einem der vorhergehenden Ansprüche, **dadurch gekennzeichnet, dass** das Übertragungsfluid (216) für die Fluiddruck-Übertragungseinrichtung (200) bzw. der Fluiddruck-Übertragungseinrichtung (200):
• bei in der Sensierumgebung (5) auftretenden Drücken und/oder Temperaturen im Wesentlichen inkompressibel und/oder wärmefest ist;
• im Wesentlichen hydrophob und/oder lipophob ist; und/oder
• Wasser, ein Öl, eine Lösung, ein organisches oder anorganisches Lösungsmittel umfasst.

4. Drucksensorvorrichtung (10) gemäß einem der vorhergehenden Ansprüche, **dadurch gekennzeichnet, dass** der Festkörper (210) der Fluiddruck-Übertragungseinrichtung (200)
bevorzugt derart ausgebildet ist, dass das in ihn einbringbare Übertragungsfluid (216) ohne eine Außeneinwirkung im Wesentlichen selbstständig im porösen und/oder schwammartigen und fluiddurchlässigen Festkörper (210) verbleibt.

5. Drucksensorvorrichtung (10) gemäß einem der vorhergehenden Ansprüche, **dadurch gekennzeichnet, dass** zwischen der Sensiereinrichtung (100) und der Fluiddruck-Übertragungseinrichtung (200) ein Koppelspalt (160) oder eine Koppelschicht (160) einrichtbar oder eingerichtet ist,
in welchem bzw. welcher das Übertragungsfluid (216) vorsehbar oder vorgesehen ist, bzw. als welcher bzw. welche das Übertragungsfluid (216) einrichtbar oder eingerichtet ist, wobei
das Übertragungsfluid (216) des Koppelspalts (160) oder der Koppelschicht (160) in Fluidkommunikation mit dem Übertragungsfluid (216) der Fluiddruck-Übertragungseinrichtung (200) bringbar ist oder steht.

6. Drucksensorvorrichtung (10) gemäß einem der vorhergehenden Ansprüche, **dadurch gekennzeichnet, dass** die Sensiereinrichtung (100) eine Sensiermembran (110) aufweist, über und/oder auf welcher der Festkörper (210) bzw. die Fluiddruck-Übertragungseinrichtung (200) vorsehbar oder vorgesehen ist, wobei die Sensiermembran (110) mit dem Übertragungsfluid (216) der Fluiddruck-Übertragungseinrichtung (200) in Fluidkommunikation bringbar oder gebracht ist.

7. Drucksensorvorrichtung (10) gemäß einem der vorhergehenden Ansprüche, **dadurch gekennzeichnet, dass**:
• die Sensiereinrichtung (100) und der Festkörper (210) bzw. die Fluiddruck-Übertragungseinrichtung (200) zweistückig separat ausgebildet oder zweiteilig zusammenhängend verbunden ist;
• die Drucksensorvorrichtung (10) derart konstituiert ist, dass die Drucksensorvorrichtung (10) mittels eines Integrationsverfahrens oder Umhüllungsverfahrens für Elektronikchips in ein Chippackage (2) integrierbar oder integriert ist;
• eine mechanische Verbindung (12) zwischen der Sensiereinrichtung (100) und dem Festkörper (210) bzw. der Fluiddruck-Übertragungseinrichtung (200) fluiddicht, insbesondere wenigstens fluiddicht gegenüber dem Übertragungsfluid (216), ist; und/oder
• der Festkörper (210) bzw. die Fluiddruck-Übertragungseinrichtung (200) oder die Drucksensorvorrichtung (10) in einen Träger (20, 30) ist.

8. Drucksensor (1), insbesondere Nieder- (1) oder Mitteldrucksensor (1), z. B. Reifendrucksensor, **dadurch gekennzeichnet, dass** der Drucksensor (1) eine Drucksensorvorrichtung (10) gemäß einem der vorhergehenden Ansprüche aufweist, wobei
in einem Festkörper (210) der Fluiddruck-Übertragungseinrichtung (200) der Drucksensorvorrichtung (10) ein Übertragungsfluid (216) vorgesehen ist, und ein Füllstand des Übertragungsfluids (216) bevorzugt kleiner als ein maximaler Füllstand des Übertragungsfluids (216) im Festkörper (210) bzw. in der Fluiddruck-Übertragungseinrichtung (200) ist.

9. Einrichtung (0), Vorrichtung (0), Gerät (0) oder System (0), z. B. Reifendruckkontrollsystem, **dadurch gekennzeichnet, dass**
die Einrichtung (0), die Vorrichtung (0), das Gerät (0) oder das System (0) eine Drucksensorvorrichtung (10) gemäß einem der vorhergehenden Ansprüche aufweist, und/oder
die Einrichtung (0), die Vorrichtung (0), das Gerät (0) oder das System (0) einen Drucksensor (1) gemäß vorhergehendem Anspruch aufweist.

## Claims

1. Pressure sensor apparatus (10) suitable for a pressure sensor (1), in particular a low-pressure sensor (1) or medium-pressure sensor (1), having
a sensing device (100) which comprises a sensing side (105) which can be turned towards a sensing environment (5) with a fluid (6) to be sensed, wherein a fluid-pressure transmission device (200) is provided indirectly or directly on the sensing side (105), **characterized in that** the fluid-pressure transmission device (200) has a porous and/or sponge-like and fluid-permeable structure or solid body (210), which is filled with a transmission fluid (216) through which a fluid pressure can be transmitted to the sensing device (100) as fluid pressure of the fluid (6) to be sensed; and
the fluid-pressure transmission device (200) is designed in such a way that the fluid pressure can be transmitted to the sensing side (105) by means of the transmission fluid (216) in the fluid-pressure transmission device (200) .

2. Pressure sensor apparatus (10) according to the preceding claim, **characterized in that** a solid body (210) of the fluid-pressure transmission device (200):
• is substantially dimensionally stable, incompressible and/or heat-resistant at pressures and/or temperatures occurring in the sensing environment (5);
• is substantially hydrophobic and/or lipophilic;
• is constituted in such a way that, at least at pressures and/or temperatures occurring in the sensing environment (5), the fluid-pressure transmission device (200) substantially does not release the transmission fluid (216);
• is constituted in such a way that relatively large empty places in the solid body (210) are smaller than relatively small particles which are present in the fluid (6) to be sensed;
• is constituted in such a way that the solid body (210) or the fluid-pressure transmission device (200) can be or is provided on the sensing device (100) by way of an equipping process for electronic chips; and/or
• comprises a ceramic, a metal, a metal alloy, a plastic or a stone.

3. Pressure sensor apparatus (10) according to either of the preceding claims, **characterized in that** the transmission fluid (216) for the fluid-pressure transmission device (200) or of the fluid-pressure transmission device (200):
• is substantially incompressible and/or heat-resistant at pressures and/or temperatures occurring in the sensing environment (5);
• is substantially hydrophobic and/or lipophilic; and/or
• comprises water, an oil, a solution, or an organic or inorganic solvent.

4. Pressure sensor apparatus (10) according to one of the preceding claims, **characterized in that** the solid body (210) of the fluid-pressure transmission device (200)
is preferably formed in such a way that, without external action, the transmission fluid (216) able to be introduced into it remains in the porous and/or sponge-like and fluid-permeable solid body (210) substantially automatically.

5. Pressure sensor apparatus (10) according to one of the preceding claims, **characterized in that** a coupling gap (160) or a coupling layer (160) can be or is configured between the sensing device (100) and the fluid-pressure transmission device (200),
in which coupling gap or coupling layer the transmission fluid (216) can be or is provided, or as which coupling gap or coupling layer the transmission fluid (216) can be or is configured, wherein
the transmission fluid (216) of the coupling gap (160) or of the coupling layer (160) can be brought into or is in fluid communication with the transmission fluid (216) of the fluid-pressure transmission device (200).

6. Pressure sensor apparatus (10) according to one of the preceding claims, **characterized in that** the sensing device (100) has a sensing diaphragm (110) above and/or on which the solid body (210) or the fluid-pressure transmission device (200) can be or is provided, wherein the sensing diaphragm (110) can be or is brought into fluid communication with the transmission fluid (216) of the fluid-pressure transmission device (200).

7. Pressure sensor apparatus (10) according to one of the preceding claims, **characterized in that**:
• the sensing device (100) and the solid body (210) or the fluid-pressure transmission device (200) is formed separately in two pieces or is connected continuously as two parts;
• the pressure sensor apparatus (10) is constituted in such a way that the pressure sensor apparatus (10) can be or is integrated into a chip package (2) by means of an integration process or encasing process for electronic chips;
• a mechanical connection (12) between the sensing device (100) and the solid body (210) or the fluid-pressure transmission device (200) is fluid-tight, in particular at least fluid-tight with respect to the transmission fluid (216); and/or
• the solid body (210) or the fluid-pressure transmission device (200) or the pressure sensor apparatus (10) is in a carrier (20, 30).

8. Pressure sensor (1), in particular a low-pressure sensor (1) or medium-pressure sensor (1), for example a tyre-pressure sensor, **characterized in that** the pressure sensor (1) has a pressure sensor apparatus (10) according to one of the preceding claims, wherein
a transmission fluid (216) is provided in a solid body (210) of the fluid-pressure transmission device (200) of the pressure sensor apparatus (10), and a fill level of the transmission fluid (216) is preferably lower than a maximum fill level of the transmission fluid (216) in the solid body (210) or in the fluid-pressure transmission device (200).

9. Device (0), apparatus (0), unit (0) or system (0), for example tyre-pressure monitoring system, **characterized in that**
the device (0), the apparatus (0), the unit (0) or the system (0) has a pressure sensor apparatus (10) according to one of the preceding claims, and/or
the device (0), the apparatus (0), the unit (0) or the system (0) has a pressure sensor (1) according to the preceding claim.

## Revendications

1. Dispositif à capteur de pression (10), approprié pour un capteur de pression (1), en particulier un capteur de basse pression (1) ou de moyenne pression (1), ledit dispositif comprenant un moyen de détection (100) qui comprend un côté détection (105) dirigé vers un environnement de détection (5) pourvu d'un fluide (6) à détecter,
un moyen de transmission de pression de fluide (200) étant prévu directement ou indirectement du côté de détection (105), **caractérisé en ce que** le moyen de transmission de pression de fluide (200) comporte une structure ou un corps solide (210) poreux et/ou spongieux et perméable aux fluides qui est rempli d'un fluide de transmission (216) et par le biais duquel une pression de fluide peut être transmise au moyen de détection (100) en tant que pression du fluide (6) à détecter ; et
le dispositif de transmission de pression de fluide (200) étant conçu de telle sorte que la pression de fluide puisse être transmise au côté de détection (105) à l'aide du fluide de transmission (216) dans le moyen de transmission de pression de fluide (200).

2. Dispositif à capteur de pression (10) selon la revendication précédente, **caractérisé en ce qu'**un corps solide (210) du moyen de transmission de pression de fluide (200) :
• est sensiblement de forme stable, incompressible et/ou résistant à la chaleur aux pressions et/ou températures apparaissant dans l'environnement de détection (5) ;
• est sensiblement hydrophobe et/ou lipophile ;
• est constitué de telle sorte que le moyen de transmission de pression de fluide (200) ne libère sensiblement pas le fluide de transmission (216) au moins à des pressions et/ou températures apparaissant dans l'environnement de détection (5) ;
• est constitué de telle sorte que des vides comparativement grands dans le corps solide (210) soient plus petits que les particules comparativement petites présentes dans le fluide (6) à détecter ;
• est constitué de telle sorte que le corps solide (210) ou le moyen de transmission de pression de fluide (200) est prévu ou puisse être prévu sur le moyen de détection (100) par un procédé d'implantation de puces électroniques ; et/ou
• comprend une céramique, un métal, un alliage métallique, une matière synthétique ou une roche.

3. Dispositif à capteur de pression (10) selon l'une des revendications précédentes, **caractérisé en ce que** le fluide de transmission (216) du moyen de transmission de pression de fluide (200) ou destiné au moyen de transmission de pression de fluide (200) :
• est sensiblement incompressible et/ou résistant à la chaleur aux pressions et/ou températures apparaissant dans l'environnement de détection (5) ;
• est sensiblement hydrophobe et/ou lipophobe ; et/ou
• comprend de l'eau, une huile, une solution, un solvant organique ou minéral.

4. Dispositif à capteur de pression (10) selon l'une des revendications précédentes, **caractérisé en ce que** le corps solide (210) du moyen de transmission de pression de fluide (200) est de préférence conçu de telle sorte que le fluide de transmission (216) qui peut être introduit dans celui-ci reste dans le corps solide poreux et/ou spongieux et/ou perméable aux fluides (210) de manière sensiblement autonome sans aucune influence extérieure.

5. Dispositif à capteur de pression (10) selon l'une des revendications précédentes, **caractérisé en ce qu'**un intervalle de couplage (160) ou une couche de couplage (160), dans lequel ou laquelle le fluide de transmission (216) est prévu ou peut être prévu, ou ce pour quoi le fluide de transmission (216) est prévu ou peut être prévu, est disposé(e) ou peut être disposé(e) entre le moyen de détection (100) et le moyen de transmission de pression de fluide (200),
le fluide de transmission (216) de l'intervalle de couplage (160) ou de la couche de couplage (160) étant amené ou pouvant être amené en communication fluidique avec le fluide de transmission (216) du moyen de transmission de pression de fluide (200).

6. Dispositif à capteur de pression (10) selon l'une des revendications précédentes, **caractérisé en ce que** le moyen de détection (100) comporte une membrane de détection (110), au-dessus de et/ou sur laquelle le corps solide (210) ou le moyen de transmission de pression de fluide (200) est prévu ou peut être prévu, la membrane de détection (110) étant amenée ou pouvant être amenée en communication fluidique avec le fluide de transmission (216) du moyen de transmission de pression de fluide (200).

7. Dispositif à capteur de pression (10) selon l'une des revendications précédentes, **caractérisé en ce que** :
• le moyen de détection (100) et le corps solide (210) ou le moyen de transmission de pression de fluide (200) sont conçus séparément en deux parties ou sont reliés solidairement en deux parties ;
• le dispositif à capteur de pression (10) est constitué de telle sorte que le dispositif à capteur de pression (10) soit intégré ou puisse être intégré dans un boîtier de puce (2) au moyen d'un procédé d'intégration ou d'encapsulation de puces électroniques ;
• une liaison mécanique (12) entre le moyen de détection (100) et le corps solide (210) ou le moyen de transmission de pression de fluide (200) est étanche, en particulier au moins étanche au fluide de transmission (216) ; et/ou
• le corps solide (210) ou le moyen de transmission de pression de fluide (200) ou le dispositif à capteur de pression (10) est dans un support (20, 30).

8. Capteur de pression (1), en particulier capteur de basse pression (1) ou de moyenne pression (1), par exemple capteur de pression de pneumatique, **caractérisé en ce que** le capteur de pression (1) comporte un dispositif à capteur de pression (10) selon l'une des revendications précédentes, un fluide de transmission (216) étant prévu dans un corps solide (210) du moyen de transmission de pression de fluide (200) du dispositif à capteur de pression (10), et un niveau de remplissage du fluide de transmission (216) étant de préférence inférieur à un niveau de remplissage maximal du fluide de transmission (216) dans le corps solide (210) ou dans le moyen de transmission de pression de fluide (200).

9. Moyen (0), dispositif (0), appareil (0) ou système (0), par exemple système de contrôle de pression de pneumatique, **caractérisé en ce que**
le moyen (0), le dispositif (0), l'appareil (0) ou le système (0) comporte un dispositif à capteur de pression (10) selon l'une des revendications précédentes, et/ou
le moyen (0), le dispositif (0), l'appareil (0) ou le système (0) comporte un capteur de pression (1) selon la revendication précédente.
